# EUROPEAN PATENT APPLICATION

(11) **EP 4 765 359 A1**
(43) Date of publication of application: **24.06.2026**
(21) Application number: 24221918.6
(22) Date of filing: 19.12.2024
(51) Int. Cl.: H01M 50/105, H01M 50/119, H01M 50/171

(54) **POUCH CELL**

(71) Applicant: Farasis Energy (Ganzhou) Co., Ltd., Ganzhou, Jiangxi 341000 (CN)
(72) Inventor: Wei, Senfeng, Ganzhou (CN); Zhong, Enqiang, Ganzhou (CN); Liang, Zhongchun, Ganzhou (CN); Liu, Yaoyun, Ganzhou (CN); Li, Sensheng, Ganzhou (CN); Zhang, Zhenxian, Ganzhou (CN)
(74) Representative: Garavelli, Paolo

(57) **Abstract**

Disclosed is a pouch cell comprising a top cover assembly, an aluminum-plastic film and a core pack, wherein top cover assembly comprises an upper top cover and a lower top cover, the upper top cover comprises a top wall and a first side wall perpendicular to the top wall, the lower top cover comprises a bottom wall and a second side wall perpendicular to the bottom wall, an upper part of the aluminum-plastic film is fitted to the outside of the first side wall, a lower part of the aluminum-plastic film is fitted to the outside of the second side wall, the aluminum-plastic film constitutes a side of the pouch cell, core pack is arranged in a space formed by the upper top cover, the lower top cover and aluminum-plastic film, upper top cover is provided with a terminal post.

## Description

### Field of the Invention

The present disclosure belongs to the technical field of batteries and particularly relates to a pouch cell.

### Background of the Invention

At present, the mainstream power battery types on the market are aluminum-case cells, pouch cells and cylindrical cells. Large cylindrical cells have begun to be mass-produced and installed in vehicles in recent years. However, those that have been put into the mature installation and mass production are mainly aluminum-case cells and pouch cells. Various types of battery packaging methods and manufacturing processes are different somehow.

The core pack of an aluminum-case cell is placed in an aluminum cell, and it plays a sealing role after being welded to a cover plate. After the second electrolyte filling, the core pack is welded to a sealing aluminum sheet to play the role of final sealing. The outer packaging design structure of the aluminum-case cell is relatively complex and comprises an explosion-proof valve, terminal posts, tab connecting pieces, plastic parts, a filling hole and other structures. Due to the limitations of its own structure, the manufacturing process of the middle and later processes is also relatively complex, and because the filling hole is small and the electrolyte filling time is long, two-step electrolyte filling is required to ensure the electrolyte retention of the cell.

The core pack of a pouch cell is placed in an aluminum-plastic film, and the aluminum-plastic film and PP layers on the outer tabs of the core pack are hot-pressed and fused to play a sealing role. The thickness of the battery cell of general pouch cells is limited due to the problem of the depth of the aluminum-plastic film punching, and the utilization rate of the pack of pouch cells is lower than that of aluminum-case cells. In addition, due to the defects of the aluminum-plastic film sealing, the thickness of the tab is thin, the overcurrent area of the tab is limited, and the tab heats up seriously during high-rate charging and discharging.

### Summary of the Invention

The technical problem to be solved by the present disclosure is to provide a pouch cell in view of the above deficiencies in the prior art. The pouch cell combines the advantages of a pouch cell with an aluminum-case cell, and a thicker battery cell may be used.

In order to solve the above problem, the present disclosure adopts the following technical solutions:
A pouch cell, comprising a top cover assembly, an aluminum-plastic film and a core pack, wherein the top cover assembly comprises an upper top cover and a lower top cover, the upper top cover comprises a top wall and a first side wall perpendicular to the top wall, the lower top cover comprises a bottom wall and a second side wall perpendicular to the bottom wall, an upper part of the aluminum-plastic film is fitted to the outside of the first side wall, a lower part of the aluminum-plastic film is fitted to the outside of the second side wall, the aluminum-plastic film constitutes a side of the pouch cell, the core pack is arranged in a space formed by the upper top cover, the lower top cover and the aluminum-plastic film, the upper top cover is provided with a terminal post, and a tab of the core pack is connected to the terminal post.

Preferably, each of the first side wall and the second side wall is provided with a first hot melt adhesive layer on the outer side thereof, and a second hot melt adhesive layer is provided on the inner side of the aluminum-plastic film.

Preferably, the upper top cover also has an exhaust port.

Preferably, the top of the aluminum-plastic film is lower than the top of the top wall of the upper top cover, and the bottom of the aluminum-plastic film is higher than the bottom of the bottom wall of the lower top cover.

Preferably, the first hot melt adhesive layer employs a PP adhesive.

Preferably, the second hot melt adhesive layer employs a PP adhesive.

Preferably, the circumference of the aluminum-plastic film is greater than the circumference of the upper top cover or the lower top cover, and after the aluminum-plastic film is fitted to the upper top cover or the lower top cover for a circle, the aluminum-plastic film with the surplus forms a double seal, thus completing side seal.

Preferably, the pouch cell further comprises a plastic assembly, the plastic assembly comprises a first plastic part and a second plastic part. The first plastic part is mounted at the bottom of the top wall of the upper top cover, and the second plastic part is mounted at the top of the bottom wall of the lower top cover.

Preferably, the pouch cell further comprises a sealing nail, and the sealing glue nail is adapted to the exhaust port and is used to seal the exhaust port after exhausting the formation process of the pouch cell.

In the pouch cell, the core pack has a single cell or a combination of multiple cells.

The pouch cell of the present disclosure combines the advantages of an aluminum-case cell and a pouch cell and adopts the combination of upper and lower covers and an aluminum-plastic film in an aluminum-case cell, with the aluminum-plastic film being fitted to the side walls of the upper and lower covers. Without being pouched, the aluminum-plastic film is directly connected to the upper and lower covers, thereby achieving the advantages of an aluminum-case cell. The battery thickness is no longer affected by the depth of a punching pit, so the pouch cell can be thicker than conventional pouch cells, or multiple core packs can be placed in the aluminum cell. In addition, the aluminum-plastic film and the outer walls of the upper and lower covers are sealed with a hot melt adhesive. When the internal pressure is high, the sealing area of the aluminum-plastic film will automatically reopen, and no explosion-proof valve is needed anymore, thereby achieving reliable safety.

### Brief Description of the Drawings

FIG. 1 is a three-dimensional schematic structural diagram of a pouch cell in Embodiment 1 of the present disclosure;
FIG. 2 is a cross-sectional view of an upper top cover and a lower top cover in the pouch cell in Embodiment 1 of the present disclosure;
FIG. 3 is a cross-sectional view of an upper top cover and an aluminum-plastic film in Embodiment 1 of the present disclosure, which is connected;
FIG. 4 is an enlarged view of part A in FIG. 3;
FIG. 5 is a top view of the pouch cell in Embodiment 1 of the present disclosure;
FIG. 6 is another top view of the pouch cell in Embodiment 1 of the present disclosure;
FIG. 7 is a top view of an exhaust port in Embodiment 1 of the present disclosure; and
FIG. 8 is a cross-sectional view of the exhaust port in Embodiment 1 of the present disclosure.

In the figures: 100-upper top cover, 110-terminal post, 120-exhaust port, 130-first hot melt adhesive layer, 140-top wall, 150-first side wall, 160-bottom wall, 170-second side wall, 180-lower top cover, 200-aluminum-plastic film, 210-second hot melt adhesive layer, 300-first plastic part, 310-second plastic part.

### Detailed Description of the Invention

The technical solution of the present disclosure will be described clearly and completely below in conjunction with the accompanying drawings of the present disclosure, and it will be apparent that the embodiments described herein are merely some, not all of the embodiments of the present disclosure. Based on the embodiments of the present disclosure, all other embodiments obtained by those of ordinary skill in the art without creative work fall within the scope of the present disclosure.

In the description of the present disclosure, it should be noted that the orientation or position relationships indicated by terms such as "up", are based on the orientation or position relationships shown in the accompanying drawings and are used only for the convenience of describing the present disclosure and simplifying the description, rather than indicating or implying that the device or element referred to must have a specific orientation, be constructed and operated in a specific orientation. Therefore, they should not be construed as limiting the present disclosure.

In the description of the present disclosure, the terms "first" and "second" are used for descriptive purposes only and are not to be understood as indicating or implying relative importance.

In the description of the present disclosure, it should be noted that, unless otherwise expressly specified and limited, the terms such as "connect", "arranged", "mount", and "fix" shall be understood broadly. For example, they may refer to fixed connection, detachable connection, or integrated connection; they may refer to direct connection, or indirect connection by an intermediate medium, or connection within two components. For those skilled in the art, the specific meanings of the above terms herein can be understood according to specific circumstances.

The present disclosure provides a pouch cell, comprising a top cover assembly, an aluminum-plastic film and a core pack, wherein the top cover assembly comprises an upper top cover and a lower top cover, the upper top cover comprises a top wall and a first side wall perpendicular to the top wall, the lower top cover comprises a bottom wall and a second side wall perpendicular to the bottom wall, an upper part of the aluminum-plastic film is fitted to the outside of the first side wall, a lower part of the aluminum-plastic film is fitted to the outside of the second side wall, the aluminum-plastic film constitutes a side of the pouch cell, the core pack is arranged in a space formed by the upper top cover, the lower top cover and the aluminum-plastic film, the upper top cover is provided with a terminal post, and a tab of the core pack is connected to the terminal post.

### Embodiment 1

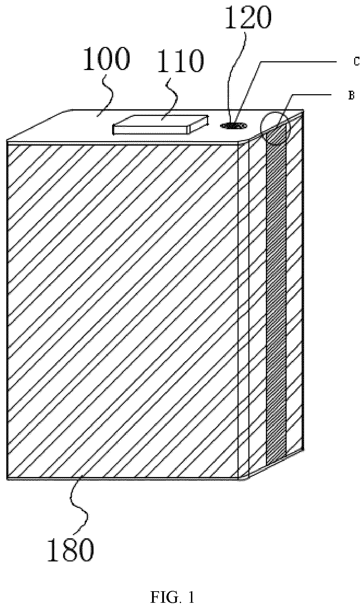

As shown in FIGs. 1-9, this embodiment discloses a pouch cell, comprising a top cover assembly, an aluminum-plastic film 200 and a core pack. The top cover assembly comprises an upper top cover 100 and a lower top cover 180, and the upper top cover 100 and the lower top cover 180 respectively constitute the top and bottom of the pouch cell.

As shown in FIG. 1, the upper top cover 100 comprises a top wall 140 and a first side wall 150 perpendicular to the top wall 140. Specifically, the top wall 140 is arranged in a horizontal direction, and the first side wall 150 is arranged in a vertical direction. The lower top cover 180 comprises a bottom wall 160 and a second side wall 170 perpendicular to the bottom wall 160. Specifically, the bottom wall 160 is arranged in a horizontal direction, the second side wall 170 is arranged in a vertical direction, and the first side wall 150 and the second side wall 170 are located in the same plane.

In this embodiment, an upper part of the aluminum-plastic film 200 is fitted to the outside of the first side wall 150, a lower part of the aluminum-plastic film 200 is fitted to the outside of the second side wall 170, and the aluminum-plastic film 200 constitutes a side of the pouch cell. The core pack is arranged in a space formed by the upper top cover 100, the lower top cover 180 and the aluminum-plastic film 200. The upper top cover 100 is provided with a terminal post 110, and a terminal tab of the core pack is connected to the terminal post 110.

As shown in FIG.s 2-4, each of the first side walls, 150, and the second side wall, 170, is provided with a first hot melt adhesive layer of 130 on the outer side thereof, and a second hot melt adhesive layer, 210 is provided on an inner side of the aluminum-plastic film 200. Specifically, the first hot melt adhesive layer 130 employs a pp adhesive, and the second hot melt adhesive layer 210 employs a pp adhesive. When heated, the first hot melt adhesive layer 130 and the second hot melt adhesive layer 210 are melted and bonded together so that the aluminum-plastic film 200 is fitted to the upper top cover 100 and the lower top cover 180.

In this embodiment, the material of the upper top cover 100 and the lower top cover 180 may be aluminum, steel or other materials.

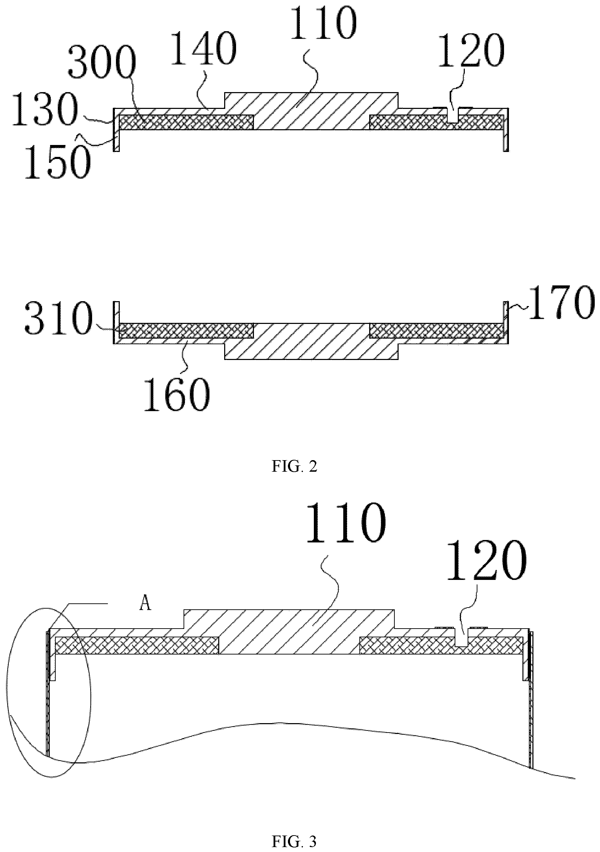

As shown in FIGs. 2 and 3, the upper top cover 100 also has an exhaust port 120, and the exhaust port 120 is used to exhaust the gas out of the cell in time after the formation and gas production process.

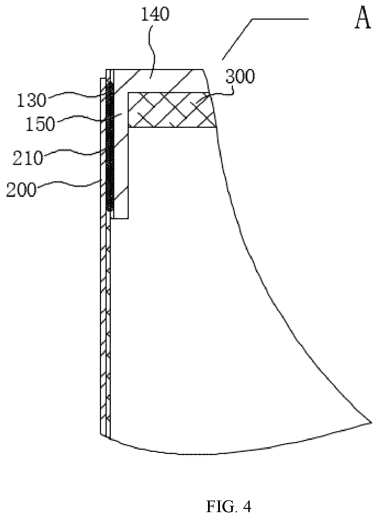

As shown in FIGs. 3 and 4, the top of the aluminum-plastic film 200 is lower than the top of the top wall 140 of the upper top cover 100, and the bottom of the aluminum-plastic film 200 is higher than the bottom of the bottom wall 160 of the lower top cover 180. That is, the top and bottom edges of the aluminum-plastic film 200 are not flatly sealed on the upper top cover 100 and the lower top cover 180. This is because the side of the aluminum layer of the aluminum-plastic film 200 has the first hot melt adhesive layer 130, which can maintain insulation from the upper top cover 100 or the lower top cover 180, but the aluminum layer of the aluminum-plastic film 200 is exposed. If the top and bottom edges of the aluminum-plastic film 200 are flatly sealed on the upper top cover 100 and the lower top cover 180, the aluminum layer of the aluminum-plastic film 200 may be in direct contact with the metal upper top cover 100 or the lower top cover 180, thereby forming an electronic circuit and causing corrosion.

Further, the top and bottom edges of the aluminum-plastic film 200 have some unfused pp adhesive areas. That is, the aluminum-plastic film 200 is not pressed at a small distance from the top and bottom to prevent the pp adhesive at the top and bottom edges of the aluminum-plastic film 200 from overflowing from the top and bottom edges of the aluminum-plastic film 200.

As shown in FIG. 1, the upper top cover 100 and the lower top cover 180 are chamfered along the circumference thereof, and the radius R of the chamfers should not be too small. Otherwise, wrinkles or poor sealing may occur at the chamfers when the aluminum-plastic film 200 is heat-sealed with the PP adhesive.

In this embodiment, the circumference of the aluminum-plastic film 200 is greater than the circumference of the upper top cover 100 or the lower top cover 180. After the aluminum-plastic film 200 is fitted to the upper top cover 100 for one circle, the aluminum-plastic film 200 with the surplus forms a double seal, thus completing the side seal. Such a design can ensure the effective fusion between the aluminum-plastic film 200 and the first hot melt adhesive layer 130 and the second hot melt adhesive layer 210 between an upper cover plate and a lower cover plate, and also a certain amount of aluminum-plastic film 200 is left along the thickness direction of the battery cell to complete the double seal, thereby ultimately achieving the sealing effect.

As shown in FIGs. 2 and 3, optionally, the pouch cell further comprises a plastic assembly, and the plastic assembly comprises a first plastic part 300 and a second plastic part 310. The first plastic part 300 is mounted at the bottom of the top wall 140 of the upper top cover 100, and the second plastic part 310 is mounted at the top of the bottom wall 160 of the lower top cover 180.

In a specific embodiment, the first plastic part 300 is fitted to the bottom of the top wall 140 of the upper top cover 100, and the second plastic part 310 is fitted to the top of the bottom wall 160 of the lower top cover 180. The first plastic part 300 and the second plastic part 310 are used to prevent the core pack from being damaged and also to insulate the top and bottom of the core pack from the upper top cover 100 and the lower top cover 180.

In this embodiment, the pouch cell further comprises a sealing glue nail, and the sealing glue nail is adapted to the exhaust port 120 and is used to seal the exhaust port 120 after exhausting the formation process of the pouch cell.

In this embodiment, the core pack may have a single cell or a combination of multiple cells. In a specific embodiment, after the tab of the core pack is connected to the terminal post 110 of the upper cover plate, the first hot melt adhesive layer 130 on the outer side of the lower top cover 180 and the second hot melt adhesive layer 210 of the aluminum-plastic film 200 are fused and hot-pressed for sealing. The aluminum-plastic film 200 does not need to be punched, and the upper limit of the thickness of the battery cell is the same as that of a conventional aluminum-case cell. A single battery cell or a combination of multiple battery cells may be welded to the terminal post 110 of the upper top cover 100, and the first hot melt adhesive layer 130 on the outer side of the upper top cover 100 and the second hot melt adhesive of the aluminum-plastic film 200 are then fused and hot-pressed for sealing.

In this embodiment, before sealing, the core pack is wrapped with a circle of Mylar film at the top and bottom positions in contact with the first side wall 150 and the second side wall 170 of the upper top cover and the lower top cover. The length of the Mylar film is greater than the height of the first side wall 150 and the second side wall 170, thereby preventing corrosion caused by the core pack short-circuiting with the first side wall 150 and the second side wall 170. Moreover, the Mylar film plays a heat-insulating role when the aluminum-plastic film 200 and the first side wall 150 and the second side wall 170 are sealed up, thereby preventing the core pack from being scalded during heat sealing.

In this embodiment, the upper top cover 100 and the lower top cover 180 can be integrally die-casted, or like conventional aluminum-case battery cells, the terminal posts 110 of the upper top cover 100 and the lower top cover 180 are welded or riveted, and the lower top cover 180 has the same structure and shape as the upper top cover 100 except that the lower top cover 180 does not have an exhaust port 120.

In this embodiment, the pouch cell may be a double-ended terminal cell or a single-ended pole cell. In the case of a single-ended terminal cell, the lower top cover 180 is a flat-bottom case cover and extends in the vertical direction to form a second side wall 170. The second side wall 170 is coated with a first hot melt adhesive layer 130, which is also used for the sealing of the aluminum-plastic film 200. In this case, the structure of the upper top cover 100 remains the same as that in the double-ended terminal cell.

The manufacturing process of the pouch cell in this embodiment is as follows:
The manufacturing process includes pre-welding of the tab, final welding of the tab and the top cover, first sealing, baking, electrolyte filling, vacuuming, second sealing, setting still, small negative pressure formation, aging, sealing, capacity separation, and static K measurement.

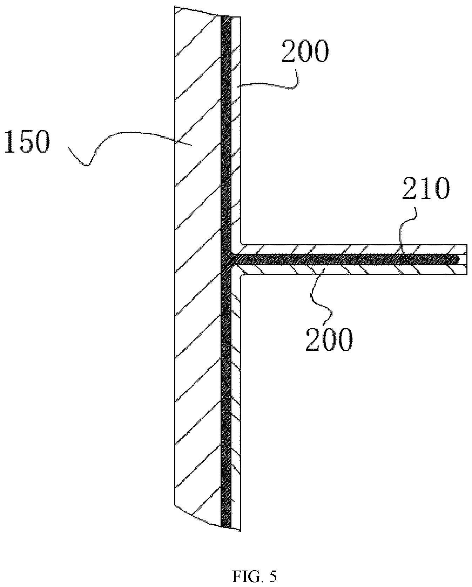

In a specific embodiment, after the aluminum-plastic film 200 and the lower top cover 180 are sealed, the side seal (first sealing) is performed. That is, the unsealed area of the aluminum-plastic film 200 left on the side is hot-pressed for sealing (the aluminum-plastic film 200 surrounds the lower top cover 180 for a circle, and the excess aluminum-plastic film 200 fits each other to form a state as shown in FIG. 5). After the side seal is completed, baking is performed just like the conventional battery manufacturing process, and after baking, the process proceeds to the electrolyte filling procedure. Because the aluminum-plastic film 200 at the other end is not sealed on the upper top cover (in this case, other sides are all sealed, leaving only the upper end open), the opening is larger than that of the conventional aluminum-case cell, thereby significantly improving the electrolyte filling efficiency. After electrolyte filling, the battery cell is set still under negative pressure to remove bubbles. After wiping the residual electrolyte on the inner wall of the aluminum-plastic film 200 in the sealing area, the aluminum-plastic film 200 at the other end is heat-sealed (second sealing) on the upper top cover 100 to ensure that there is no electrolyte residue in the aluminum-plastic film 200 in the sealing area, thereby avoiding affecting the sealing effect.

After the aluminum-plastic film 200 and the upper top cover 100 are sealed, the double seal area on the upper top cover 100 needs to be sealed one more time (by reheating and repressing) to ensure that the sealing of the upper top cover 100 is effective.

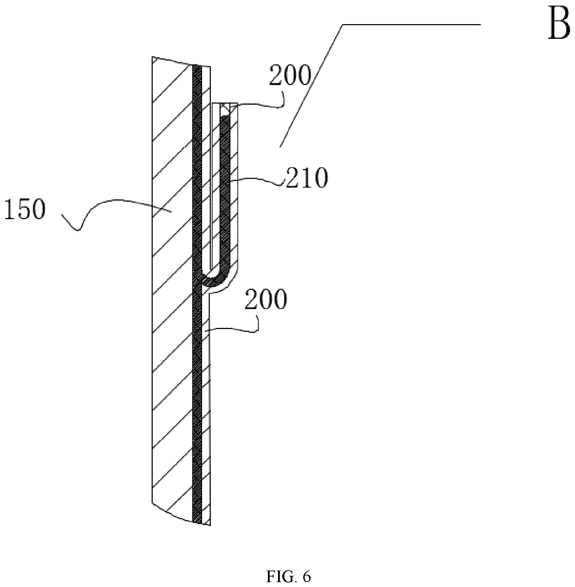

As shown in FIG. 6, after the previous procedure is completed, the double seal area of the aluminum-plastic film 200 is folded and sealed with adhesive tape to prevent the double seal area from affecting subsequent procedures. After the second sealing, the upper top cover 100 is designed with an exhaust port 120 to ensure that the gas produced by the subsequent formation can be exhausted in time. After the exhausting of the gas produced by the formation is completed, the exhaust port 120 is sealed with a sealing glue nail.

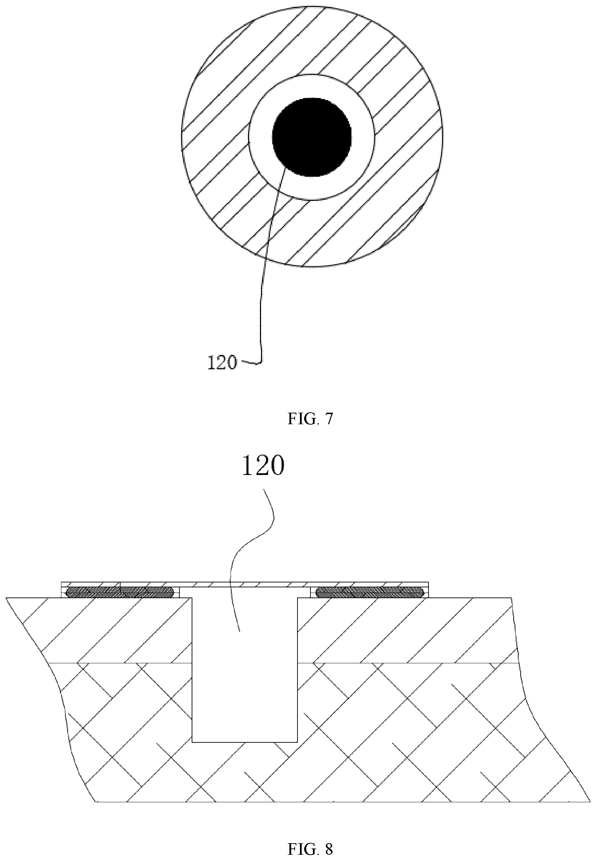

As shown in FIGs. 7 and 8, during the time between the sealing of the aluminum-plastic film 200 and the upper top cover 100 and the procedure of formation and gas production, the exhaust port 120 is sealed by the aluminum-plastic film 200 (in a disc shape). In a specific embodiment, two sides on the top of the exhaust port 120 are coated with a PP adhesive, and the aluminum-plastic film 200 is heat-sealed on the top of the exhaust port 120 by the PP adhesive.

The activation and infiltration process of the pouch cell is not significantly different from that of the conventional aluminum-case cells and is carried out in a dew point environment. The structure of the present disclosure is packaged with the aluminum-plastic film 200, and the formation process is pressurized to exhaust the gas produced inside the core pack. The gas generated by the formation of the battery cell is extracted away by a negative pressure device of formation equipment via the exhaust port 120. The formation negative pressure does not need to be too large as long as the gas generated by the formation can be extracted away.

The pouch cell in this embodiment has the advantages of both a pouch cell and an aluminum-case cell. Compared with a conventional pouch cell, the pouch cell described herein has the following advantages: the aluminum-plastic film 200 does not need to be punched, and the cell thickness is no longer affected by the depth of the punching pit and can be greater than that of the conventional pouch cell, or multiple core packs may be built in the pouch cell; there is no need to reserve the space required for the welding of an outer tab, and the space utilization rate of the single battery cell is improved. Compared with an aluminum-case cell, the pouch cell described herein has the following advantages: the aluminum-plastic film 200 and the outer PP adhesive layer of the cover plate are thermally fused and sealed, and when the internal pressure is high, the sealing layer is automatically opened and no explosion-proof valve is needed anymore, thereby achieving reliable safety; the aluminum-plastic film 200 is packaged with the lower cover plate and then injected; because the upper opening during the electrolyte filling process is large, the electrolyte filling efficiency is significantly improved, as compared to the conventional aluminum-case cell in which the electrolyte is filled via the filling hole.

It is understandable that the above embodiments are merely exemplary embodiments used to illustrate the principle of the present disclosure, but the present disclosure is not limited thereto. For those of ordinary skill in the art, various modifications and improvements can be made without departing from the spirit and essence of the present disclosure, and these modifications and improvements are also considered to be within the scope of the present disclosure.

## Claims

1. A pouch cell, **characterized by**, comprising a top cover assembly, an aluminum-plastic film (200) and a core pack,
the top cover assembly comprises an upper top cover (100) and a lower top cover (180), the upper top cover (100) comprises a top wall (140) and a first side wall (150) perpendicular to the top wall (140), the lower top cover (180) comprises a bottom wall (160) and a second side wall (170) perpendicular to the bottom wall (160),
an upper part of the aluminum-plastic film (200) is fitted to the outside of the first side wall (150), a lower part of the aluminum-plastic film (200) is fitted to the outside of the second side wall (170), the aluminum-plastic film (200) constitutes a side of the pouch cell,
the core pack is arranged in a space formed by the upper top cover (100), the lower top cover (180) and the aluminum-plastic film (200), the upper top cover is provided with a terminal post (110), and a tab of the core pack is connected to the terminal post (110).

2. The pouch cell according to claim 1, **characterized in that**, each of the first side wall (150) and the second side wall (170) is provided with a first hot melt adhesive layer (130) on an outer side thereof, and a second hot melt adhesive layer (210) is provided on an inner side of the aluminum-plastic film (200).

3. The pouch cell according to claim 2, **characterized in that**, the upper top cover (100) also has an exhaust port (120).

4. The pouch cell according to claim 3, **characterized in that**, the top of the aluminum-plastic film (200) is lower than the top of the top wall (140) of the upper top cover (100), and the bottom of the aluminum-plastic film (200) is higher than the bottom of the bottom wall (160) of the lower top cover (180).

5. The pouch cell according to claim 2, **characterized in that**, the first hot melt adhesive layer (130) employs a PP adhesive.

6. The pouch cell according to claim 2, **characterized in that**, the second hot melt adhesive layer employs a PP adhesive.

7. The pouch cell according to claim 1, **characterized in that**, the circumference of the aluminum-plastic film (200) is greater than the circumference of the upper top cover (100) or the lower top cover (180), and after the aluminum-plastic film (200) is fitted to the upper top cover (100) or the lower top cover (180) for a circle, the aluminum-plastic film (200) with the surplus forms a double seal, thus completing side seal.

8. The pouch cell according to claim 7, **characterized by** also comprising a plastic assembly, wherein the plastic assembly comprises a first plastic part (300) and a second plastic part (310), the first plastic part (300) is mounted at the bottom of the top wall (140) of the upper top cover (100), and the second plastic part (310) is mounted at the top of the bottom wall (160) of the lower top cover (180).

9. The pouch cell according to any one of claims 1 to 8, **characterized by** further comprising a sealing glue nail, wherein the sealing glue nail is adapted to the exhaust port (120) and is used to seal the exhaust port (120) after exhausting in the formation process of the pouch cell.

10. The pouch cell according to any one of claims 1 to 8, **characterized in that**, the core pack has a single cell or a combination of multiple cells.
